# EUROPEAN PATENT APPLICATION

(11) **EP 0 962 924 A2**
(43) Date of publication of application: **08.12.1999**
(21) Application number: 99110811.9
(22) Date of filing: 04.06.1999
(51) Int. Cl.: G11B 7/24

(54) **Optical recording medium and manufacturing method therefor**

(30) Priority: 05.06.1998 JP 15795798
(71) Applicant: SONY CORPORATION, Tokyo (JP)
(72) Inventor: Abiko, Toru, Shinagawa-ku, Tokyo (JP); Miyata, Kazutomo, Shinagawa-ku, Tokyo (JP)
(74) Representative: MÜLLER & HOFFMANN Patentanwälte

(57) **Abstract**

A recording medium having sufficient characteristics, such as signal characteristics at an elevated density or recording durability, and a method for producing the recording medium. Specifically, there is provided an optical recording medium having a recording layer formed of a phase-change material capable of producing reversible phase changes between the crystal state and the amorphous state, in which the phase changes are induced in the recording layer on illuminating light rays on the recording layer to record and/or erase information signals. The recording layer contains AgαInβSbγTeδ as the phase-change material, in which the proportions of components α, β, γ and δ in at% meet the relation of 6 ≤ α ≤ 16, 1.1 ≤ δ/β ≤ 2.2 and 2 ≤ γ/δ ≤ 3.

## Description

### BACKGROUND OF THE INVENTION

### Field of the Invention

This invention relates to an optical recording medium having a recording layer formed of a phase-change material producing reversible phase changes between the crystal state and the amorphous state and in which light rays are illuminated thereon to produce phase changes in the recording layer to record and/or erase information signals.

### Description of the Related Art

Recently, researches for an optical recording system are progressing in the field of data recording. In this optical recording system, information signals can be recorded/reproduced in a non-contact fashion with respect to the recording medium such that a recording density about one order of magnitude higher than in the magnetic recording system can be achieved. Moreover, the optical recording system has a number of merits such as being able to cope with memory configurations of the read-only type, write-once type or the overwrite type. Thus, the optical recording system finds extensive application from the industrial type to the domestic type apparatus as a recording system enabling large-capacity files to be realized inexpensively.

Of the above-described optical recording systems, configured to cope with the overwrite memory configurations, there are a magneto-optical disc and a phase-change optical disc. With the magneto-optical disc, a recording layer of a magnetic material is partially heated to higher than a Curie temperature or a temperature compensation point to decrease the coercivity of the recording layer. A recording magnetic field is applied from outside to change the direction of magnetization of the recording layer to record information signals or to read out the information signals magnetically. With the phase-change optical disc, having a recording layer formed of a phase-change material producing reversible phase changes between the crystal state and the amorphous state, the recording layer is raised in temperature by illumination of laser light etc to produce phase changes in the recording layer to record or erase the information. Also, the information signals are read out from the optical disc optically.

Among the phase-change materials used for this phase-change optical disc, there are known so-called chalcogen-based alloy materials, such as Ge-The based alloy materials, Ge-Te-Sb based alloy materials, In-Sb-Te based alloy materials or Ge-Sn-Te based alloy materials.

In the Japanese Laying-Open Patents S-62-3886, S-63-225934, H-3-80635 and H-8-32482, the proportions of the components of the Ge-Sb-Te based alloy materials are specified. Also, in Japanese Laying-Open Patent H-4-232779 and H-166268, there are specified proportions of the components of the Ag-In-Sb-Te based material.

The aforementioned phase-change optical discs cannot be said to be optimum in high linear velocity, signal characteristics at a higher density or in recording durability, so that it is desired to improve characteristics of the phase-change optical disc further.

### SUMMARY OF THE INVENTION

It is therefore an object of the present invention to provide an optical recording medium having sufficient characteristics for high linear velocity and high recording density, and in recording durability, and also having sufficient characteristics in recording/erasure characteristics and durability on repeated use critical in an overwrite memory.

In one aspect, the present invention provides an optical recording medium having a recording layer formed of a phase-change material capable of producing reversible phase changes between the crystal state and the amorphous state, in which the phase changes are induced in the recording layer on illuminating light rays on the recording layer to record and/or erase information signals. The recording layer contains AgαInβSbγTeδ as the phase-change material, wherein the proportions of components α, β, γ and δ in at % meet the relation of 6 ≤ α ≤16, 1.1 ≤ δ/β ≤ 2.2 and 2 ≤ γ/δ ≤ 3.

In the optical recording medium according to the present invention, in which the composition of the recording layer formed of a phase-change material is set as specified above, phase change speed in the recording layer is increased to effect information recording satisfactorily even at a high linear velocity.

In another aspect, the present invention provides a method for producing an optical recording medium having a recording layer formed of a phase-change material capable of producing reversible phase changes between the crystal state and the amorphous state, in which the phase changes are induced in the recording layer on illuminating light rays on the recording layer to record and/or erase information signals. The recording layer is formed by sputtering with AgαInβSbγTeδ as a target, in which the proportions of components α, β, γ and δ in at % meet the relation of 6 ≤ α ≤ 16, 1.1 ≤ δ/β ≤ 2.2 and 2 ≤ γ/δ ≤ 3.

With the method for producing an optical recording medium according to the present invention, in which the target of the above-mentioned composition is used in forming the recording layer formed of a phase-change material, the phase-change speed in the recording layer may be increased to realize an optical recording medium capable of satisfactorily recording the information even at an elevated linear velocity.

That is, by specifying the proportions of components of the composition AgαInβSbγTeδ constituting the recording layer, an optical recording medium may be realized which is able to effect recording/reproduction satisfactorily even at an elevated linear velocity.

In addition, by specifying the proportions of components of the composition AgαInβSbγTeδ of the target material at the time of producing a recording layer by sputtering, an optical recording medium may be realized which is able to effect recording/reproduction satisfactorily even at an elevated linear velocity.

### BRIEF DESCRIPTION OF THE DRAWINGS

Fig. 1 is a schematic cross-sectional view showing an illustrative structure of an optical disc according to the present invention.
Fig.2 shows a recording waveform used for evaluating jitter characteristics of an optical disc.
Fig.3 shows the relation between the recording linear velocity and jitter values.

### DESCRIPTION OF THE PREFERRED EMBODIMENTS

Referring to the drawings, preferred embodiments of the present invention will be explained in detail.

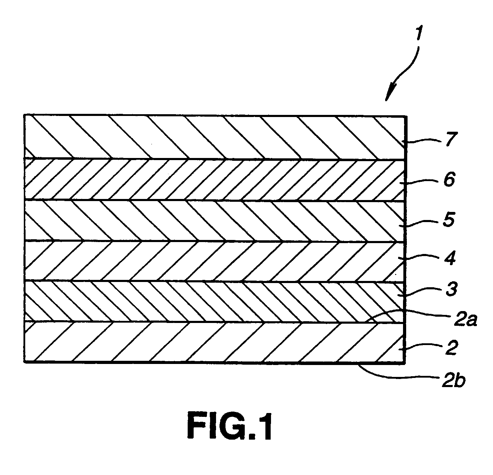

Fig.1 shows a schematic cross-sectional view showing an illustrative structure of an optical disc according to the present invention. This optical recording medium is a phase-change disc-shaped optical recording medium, referred to below as an optical disc. This optical disc 1 has, on a major surface 2a of a substrate 2, a first dielectric layer 3, a recording layer 4, a second dielectric layer 5, a heat diffusion layer 6 and a protective layer 7, in this order.

The substrate 2 is formed of a material that can transmit the laser light, such as polycarbonate or glass.

The first dielectric layer 3 and the second dielectric layer 5 are preferably formed of a material at least containing ZnS, and may be enumerated by, for example, ZnS -SiO₂. The first dielectric layer 3 is preferably 60 to 130 nm, specifically, 120 nm, as an example. The second dielectric layer 5 is preferably 10 to 35 nm, specifically, 20 nm, as an example.

The recording layer 4 is formed of an AgαInβSbγTeδ material, as a phasechange material, wherein the proportions of the components α,β, γ and δ (at%) satisfy the relation of 6 ≤ α ≤ 16, 1.1 ≤ δ/β ≤ 2.2 and 2 ≤ γ/δ ≤ 3. By setting the composition of the recording layer formed of the phase-change material to these value ranges, it is possible to raise the phase change speed and hence to increase the recording characteristics of the optical disc 1 at an elevated linear velocity. The recording layer 4 preferably contains N or O. This recording layer 4 preferably has a thickness of 15 to 35 nm, specifically, 30 nm.

The heat diffusion layer 6 is formed of, for example, aluminum. The heat diffusion layer 6 preferably has a thickness of 60 to 150 nm and specifically 120 nm, as an example.

The protective layer 7 is formed of, for example, UV curable resin.

For recording the information on such optical disc, the recording light, such as the recording laser light, is partially illuminated from a major surface 2b of the substrate 2 opposite to its major surface 2a to change a portion of the recording layer 4 into a pre-set crystal or amorphous phase to effect the recording. Depending on the heating temperature, the above-described phase-change material is turned into an amorphous state by rapid heating or quenching, while being turned into the amorphous state by being cooled gradually. The information is recorded by forming a crystal region and an amorphous region in the recording layer 4, depending on the information signals.

For reproducing the information from the optical disc 1, the reproducing light, such as laser light, is illuminated on the recording layer 4 from the major surface 2b of the substrate opposite to its major surface 2b to reproduce the information corresponding to the crystal phase or the information corresponding to the amorphous phase depending on the difference in reflectance between the crystal phase and the amorphous phase in the recording layer 4. Meanwhile, the reproducing light needs to be such as not to induce phase changes in the recording layer 4.

The manufacturing method for the optical disc 1 is hereinafter explained.

First, the substrate 2 formed of a material that can transmit the laser light, such as polycarbonate or glass, is provided, and a groove for tracking is formed spirally.

Next, ZnS -SiO₂ etc is deposited on a surface of the substrate 2 carrying the groove to form the first dielectric layer 3. This first dielectric layer 3 preferably has a thickness of 60 to 130 nm and specifically 120 nm, as an example.

Then, an AgαInβSbγTeδ material, as a phase-change material, is deposited by sputtering, on the first dielectric layer 3b, to form the recording layer 4. This recording layer 4 preferably has a thickness of 15 to 35 nm and specifically 30 nm, as an example.

When forming the recording layer 4 by sputtering, the AgαInβSbγTeδ material is used as a target, with the proportions α, β, γ and δ in at% satisfying the relation of 6 ≤ α ≤ 16, 1.1 ≤ δ/β ≤ 2.2 and 2 ≤ γ/δ ≤ 3. An Ar gas is used as the sputtering gas. It is possible for not more than 10% of O₂ or N₂ gas to be contained in the Ar gas. By employing a sputtering gas containing the O₂ or N₂ gas, N or Oxy is captured into the recording layer 4.

Then, ZnS -SiO₂ is deposited by sputtering on the recording layer 4 to form the second dielectric layer 5. The second dielectric layer 5 preferably has a thickness of to 35 mm and specifically 20 nm, as an example.

Then, aluminum etc is deposited on the second dielectric layer 5 to form the heat diffusion layer 6. This heat diffusion layer 6 preferably has a thickness of 60 to 150 nm and specifically 120 nm as an example.

Finally, a UV curable resin etc is coated on the heat diffusion layer 6 by spin coating tp form the protective layer 7 to complete the optical disc 1.

An experimental example on the composition of the material making up the recording layer of the optical disc or the composition of the sputtering gas at the time of producing the recording layer by sputtering is now explained.

### Example

In the present experimental example, optical discs were prepared as the composition of AgαInβSbγTeδ constituting the recording layer and the proportions of the O₂ or N₂ gas contained in the sputtering gas used at the time of forming the recording layer by sputtering were changed, and evaluation was made of the optical discs.

First, a polycarbonate substrate, on one major surface of which a groove for tracking is formed spirally at a pitch of 0.85 µm, was prepared, and ZnS-SiO₂ was deposited by sputtering on a surface of the substrate carrying the groove to a thickness of 120 nm to form the first dielectric layer.

On this first dielectric layer was then deposited AgαInβSbγTeδ to a thickness of 30 nm to form the recording layer.

A second dielectric layer was then formed by depositing ZnS-SiO₂ to a thickness of 20 nm by sputtering to form the second dielectric layer.

On this second dielectric layer was then deposited Al to a thickness of 120 nm by sputtering to form the heat diffusion layer.

This sputtering for the respective layers was effected using a sputtering device having chambers separated for respective materials. For sputtering, the degree of vacuum in each chamber was set to not higher than 5×10⁻⁵ Pa, after which the Ar gas was introduced to set the pre-set vacuum.

The substrate, on which respective layers have been formed, is then taken out from the sputtering device. On the heat diffusion layer, a protective layer formed of a UV curable resin is formed by spin coating on the heat diffusion layer to complete the optical disc. Optical disc samples were prepared as the composition of AgαInβSbγTeδ and the proportion of the O₂ or N₂ gas contained in the sputtering gas used when forming the recording layer were changed as shown in Table 1 below. These optical disc samples were denominated samples 1 to 44.

These optical disc samples were then initialized. The initialization herein means setting the recording layer of the optical disc to a stable pre-set crystal layer.

Of the optical disc samples 1 to 44, the relation between the jitter value and the linear velocity was evaluated.

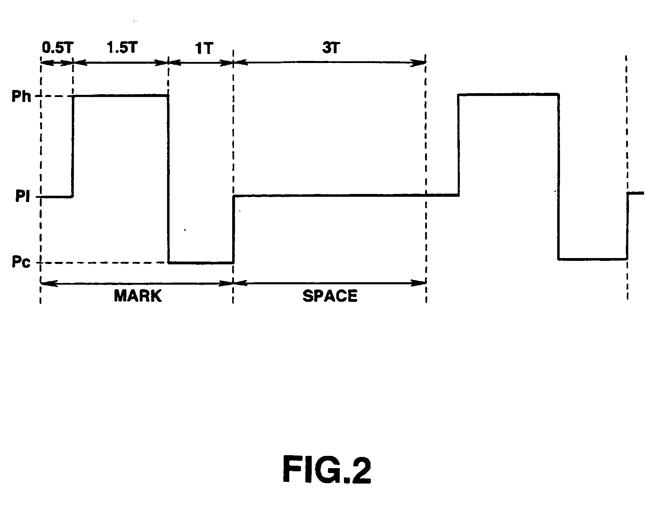

For evaluation, recording was made by a phase-change optical recording/reproducing apparatus, at a linear velocity of 4 m to 16 m/sec, using a light emission pattern shown in Fig.2, so that the 3T mark length will be equal to 0.576 µm. In Fig.2, Pc denotes the power of 0.5 mW, with Ph andPl being the powers which will give the optimum jitter value.

The standard deviation of mark edges to clocks after ten times of overwriting, normalized with the window width, was used as the jitter value. Under this condition, error correction is possible if the jitter value is not more than 15%. Therefore, the linear velocity for which the jitter value is not more than 15% is accepted as the linear velocity that permits recording/reproduction.

The relation between the jitter values and the linear velocity was checked and evaluated. The evaluation is OK and NG if there is any linear speed range higher than 7 m/sec for which the jitter value is not more than 15% and if there is no satisfactory linear velocity range for which the jitter value is not more than 15%, respectively.

Table 1 shows the results of evaluation as to the composition of AgαInβSbγTeδ making up the recording layer of the optical disc , the ratio of the O₂ gas or the N₂ gas contained in the sputtering gas, and the relation between the jitter value and the linear velocity, for each of samples 1 to 44.

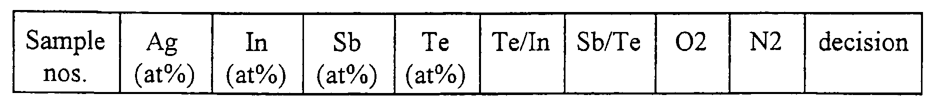

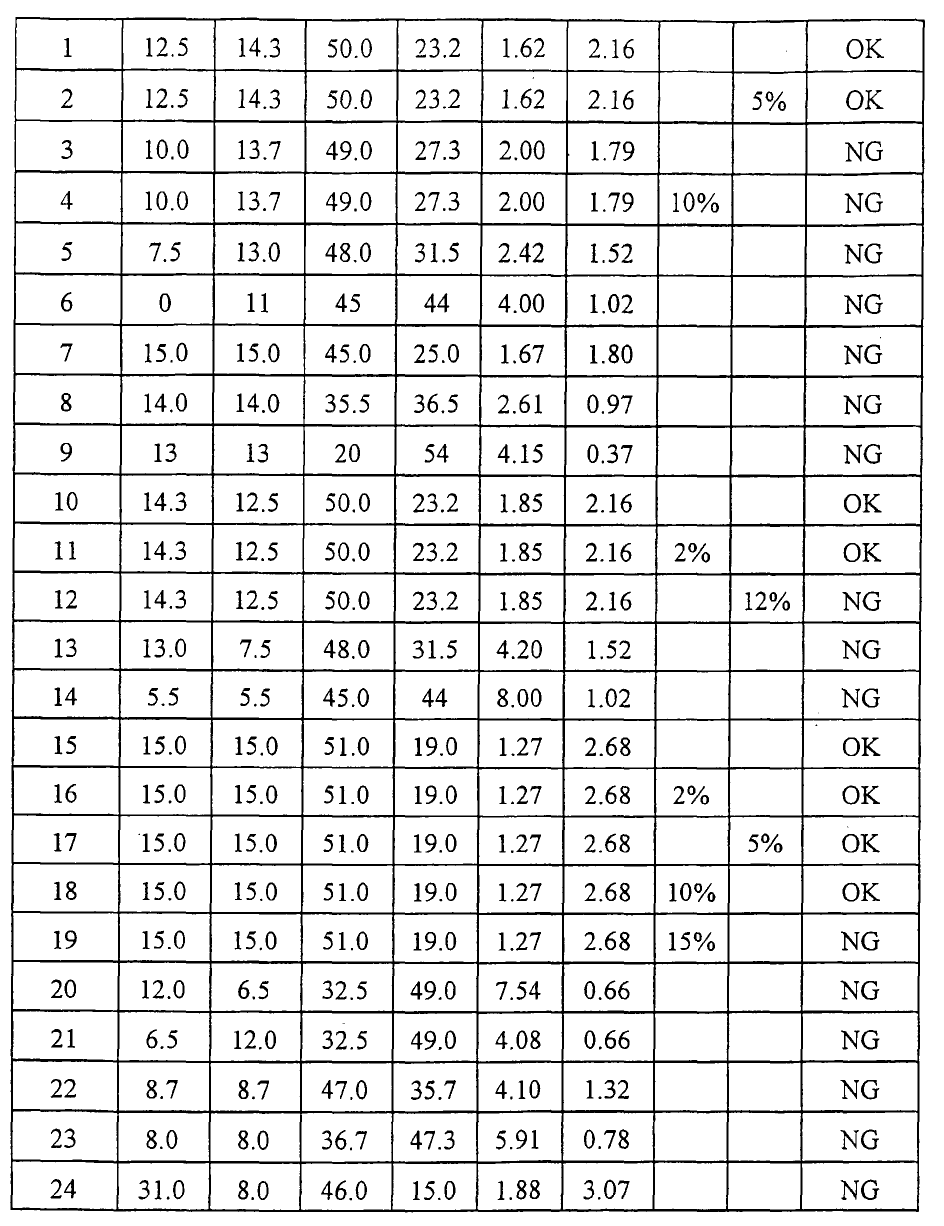

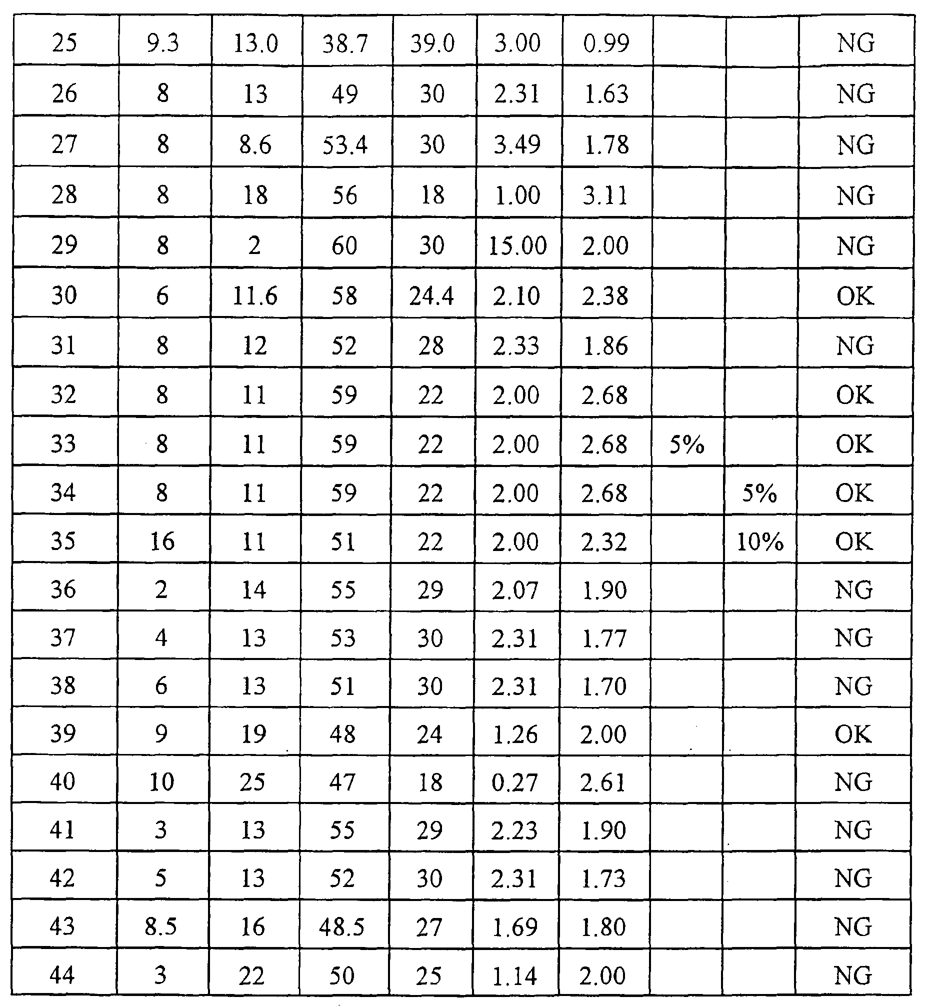

For an optical disc sample, in which the composition of AgαInβSbγTeδ making up the recording layer fails to meet the relation of 6 ≤ α ≤ 16, 1.1 ≤ δ/β ≤ 2.2 and 2 ≤ γ/δ ≤ 3, the valuation as to the relation between the jitter value and the linear velocity is NG.

Conversely, for an optical disc sample, in which the composition of AgαInβSbγTeδ making up the recording layer meets the relation of 6 ≤ α ≤ 16, 1.1 ≤ δ/β ≤ 2.2 and 2 ≤ γ/δ ≤ 3, the evaluation as to the relation between the jitter value and the linear velocity is OK.

It has thus been shown that optimum jitter characteristics can be realized for a composition of the recording layer of AgαInβSbγTeδ where the relation of 6 ≤ α ≤ 16, 1.1 ≤ δ/β ≤ 2.2 and 2 ≤ γ/δ ≤ 3 is met.

However, if the composition of the recording layer is AgαInβSbγTeδ and the composition meets the relation of 6 ≤ α ≤ 16, 1.1 ≤ δ/β ≤ 2.2 and 2 ≤ γ/δ ≤ 3, but if oxygen or nitrogen is contained in an amount exceeding 10%, the evaluation on the relation between the jitter value and the linear velocity is NG. It is therefore desirable that the amounts of the O₂ gas or the N₂ gas contained in the sputtering gas be 10% or less.

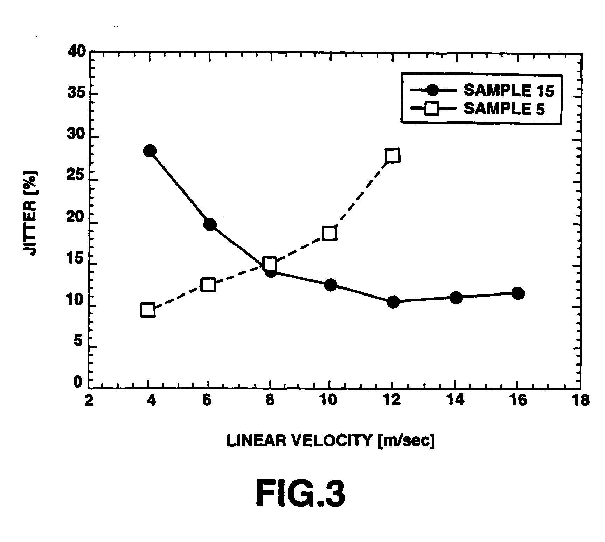

Fig.3 shows measured results of the relation between the recording linear velocity and jitter values of the optical discs of the samples 5 and 15. Fig.3 shows the jitter bottom values at respective values of the linear velocity. It is seen from Fig. 3 that, with the optical disc of sample 5, the linear velocity which gives the jitter value of 15% or less is as low as 4m/sec or less, and that, with the optical disc of sample 15, optimum jitter characteristics of the jitter value of 15% or less are obtained even with the high linear velocity of 7 m/second or higher.

## Claims

1. An optical recording medium having a recording layer formed of a phase-change material capable of producing reversible phase changes between the crystal state and the amorphous state, in which the phase changes are induced in said recording layer on illuminating light rays on said recording layer to record and/or erase information signals, wherein the improvement resides in that
said recording layer contains AgαInβSbγTeδ as the phase-change material wherein the proportions of components α, β, γ and δ in at% meet the relation of 6 ≤ α ≤ 16, 1.1 ≤ δ/β ≤ 2.2 and 2 ≤ γ/δ ≤ 3.

2. The optical recording medium according to claim 1 wherein said recording layer contains N or O.

3. A method for producing an optical recording medium having a recording layer formed of a phase-change material capable of producing reversible phase changes between the crystal state and the amorphous state, in which the phase changes are induced in said recording layer on illuminating light rays on said recording layer to record and/or erase information signals, wherein the improvement resides in that
said recording layer is formed by sputtering with AgαInβSbγTeδ as a target, and in that
the proportions of components α, β γ and δ in at% meet the relation of 6 ≤ α ≤ 16, 1.1 ≤ δ/β ≤ 2.2 and 2 ≤ γ/δ ≤ 3.

4. The method for producing an optical recording medium according to claim 3 wherein, when forming said recording layer by sputtering, a gas mixture of an Ar gas and a N₂ gas or an O₂ gas is used as a sputtering gas and wherein the amount of the N₂ gas or the O₂ gas in said sputtering gas is set to 10% or less.
